# EUROPEAN PATENT APPLICATION

(11) **EP 4 131 595 A1**
(43) Date of publication of application: **08.02.2023**
(21) Application number: 20928087.4
(22) Date of filing: 28.12.2020
(51) Int. Cl.: H01M 50/20, B60K 1/04, B60L 50/60, B60L 53/14

(54) **POWER SUPPLY DEVICE, AND POWER STORAGE DEVICE AND ELECTRIC VEHICLE PROVIDED WITH POWER SUPPLY DEVICE**

(30) Priority: 31.03.2020 JP 2020063978
(71) Applicant: SANYO Electric Co., Ltd., Daito-shi Osaka 574-8534 (JP)
(72) Inventor: KOGAMI Nao, Chuo-ku, Osaka-shi, Osaka 540-6207 (JP); HARAZUKA Kazuhiro, Chuo-ku, Osaka-shi, Osaka 540-6207 (JP); FUJINAGA Koji, Chuo-ku, Osaka-shi, Osaka 540-6207 (JP)
(74) Representative: Novagraaf International SA
(86) International application number: PCT/JP2020/049217
(87) International publication number: WO 2021/199547

(57) **Abstract**

A power supply device includes: battery block (10) formed by stacking a plurality of battery cells (1) in a thickness with separator (2) interposed therebetween; a pair of end plates (3) disposed on both end surfaces of battery block (10); and binding bar (4) that is coupled to the pair of end plates (3) and fixes battery block (10) in a pressurized state via end plates (3). Separator (2) is made of elastomer (5) having a comb-like shape in cross-sectional view, in which a plurality of rows of parallel ridges (21) and a plurality of rows of parallel grooves (22) are alternately disposed on a surface of plate-shaped part (20) facing battery cell (1).

## Description

### TECHNICAL FIELD

The present invention relates to a power supply device in which a large number of battery cells are stacked, and an electric vehicle and a power storage device equipped with the power supply device.

### BACKGROUND ART

A power supply device in which a large number of battery cells are stacked is suitable as a power source that is mounted on an electric vehicle and supplies electric power to a motor that causes the vehicle to travel, a power source that is charged with a natural energy such as a solar battery or midnight electric power, and a backup power source in the event of a power failure. In the power supply device having this structure, a separator is sandwiched between the stacked battery cells. The power supply device in which a large number of battery cells are stacked with a separator interposed therebetween fixes the stacked battery cells in a pressurized state in order to prevent positional displacement due to expansion of the battery cells. In order to realize this, in the power supply device, a pair of end plates are disposed on both end surfaces of a battery block in which the large number of battery cells are stacked, and the pair of end plates are connected by binding bars. (See PTL 1.)

### Citation List

### Patent Literature

PTL 1: Unexamined Japanese Patent Publication No. 2018-204708

### SUMMARY OF THE INVENTION

### Technical problem

In the power supply device, the plurality of battery cells are stacked to form the battery block, the pair of end plates are disposed on both end surfaces of the battery block, and the battery block is held in a pressurized state by a considerably strong pressure from both the end surfaces, and the pair of end plates are connected by the binding bars. In the power supply device, the battery cells are fixed in a strongly pressurized state to prevent malfunction due to relative movement or vibration of the battery cells. When the power supply device uses, for example, a battery cell with a stacked surface having an area of about 100 cm², the end plates are pressed with a strong force of several tons and fixed with the binding bars. In the power supply device having this structure, a plate-shaped insulating plastic plate is used as the separator in order to insulate the adjacently stacked battery cells with the separator. This separator presses the entire surface in a planar shape when the battery cell expands. When the entire surface of the battery cell is pressed, the fluidity of the electrolyte inside the battery cell deteriorates. This is because the density of the electrodes laminated in multiple layers in the exterior can is increased. The decrease in fluidity of the electrolyte causes the degradation of the battery to shorten the life.

The present invention has been developed for the purpose of solving the above disadvantages, and an object of the present invention is to provide a technique for improving fluidity of an electrolyte in a battery cell to suppress degradation.

### Solution to problem

A power supply device according to an aspect of the present invention includes: a battery block formed by stacking a plurality of battery cells in a thickness with a separator interposed between the battery cells; a pair of end plates disposed on both end surfaces of the battery block; and a binding bar that is coupled to the pair of end plates and fixes the battery block in a pressurized state via the end plates. The separator is made of an elastomer in which a plurality of rows of parallel ridges and a plurality of rows of parallel grooves are alternately arranged on a surface of the plate-shaped part, the surface facing the battery cell, and a cross-sectional shape thereof is a comb-like shape.

An electric vehicle according to an aspect of the present invention includes: the above-described the power supply device; a motor for traveling to which electric power is supplied from the power supply device; a vehicle body on which the power supply device and the motor are mounted; and wheels driven by the motor to cause the vehicle body to travel.

A power storage device according to an aspect of the present invention includes: the above-described power supply device; and a power supply controller that controls charging and discharging to the power supply device, wherein the power supply controller enables charging to the battery cells by electric power from an outside, and performs control to charge the battery cells.

### Advantageous effect of invention

In the power supply device described above, parallel ridges of the separator locally presses an electrode of the battery cells to suppress degradation of the battery due to a decrease in fluidity of an electrolyte solution.

### BRIEF DESCRIPTION OF THE DRAWINGS

Fig. 1 is a perspective view of a power supply device according to an exemplary embodiment of the present invention.
Fig. 2 is a vertical cross-sectional view of the power supply device illustrated in Fig. 1.
Fig. 3 is a horizontal cross-sectional view of the power supply device illustrated in Fig. 1.
Fig. 4 is an exploded perspective view illustrating a stacked structure of battery cells and a separator.
Fig. 5 is a partially enlarged cross-sectional view illustrating the stacked structure of battery cells and the separator.
Fig. 6 is an enlarged cross-sectional view of main parts illustrating a state in which a surface of an expanding battery cell is pushed by a parallel ridge and deformed into a wave shape.
Fig. 7 is a perspective view illustrating another example of the separator.
Fig. 8 is a partially enlarged cross-sectional view illustrating another example of the separator.
Fig. 9 is a partially enlarged cross-sectional view illustrating another example of the separator.
Fig. 10 is a partially enlarged cross-sectional view illustrating another example of the separator.
Fig. 11 is an exploded perspective view illustrating a stacked structure of battery cells and a separator of another example.
Fig. 12 is a block diagram illustrating an example of a power supply device mounted in a hybrid automobile that travels by an engine and a motor.
Fig. 13 is a block diagram illustrating an example of a power supply device mounted in an electric automobile that travels only by a motor.
Fig. 14 is a block diagram illustrating an example where the power supply device is applied as a power supply device for power storage.

### DESCRIPTION OF EMBODIMENT

Hereinafter, the present invention will be described in detail with reference to the drawings. Note that, in the following description, terms (e.g., "top", "bottom", and other terms including those terms) indicating specific directions or positions are used as necessary; however, the use of those terms is for facilitating the understanding of the invention with reference to the drawings, and the technical scope of the present invention is not limited by the meanings of the terms. Further, parts denoted by the same reference marks in a plurality of drawings indicate the same or equivalent parts or members.

Furthermore, exemplary embodiments to be described below show a specific example of the technical idea of the present invention, and the present invention is not limited to the exemplary embodiments below. Further, unless otherwise specified, dimensions, materials, shapes, relative dispositions, and the like of the configuration components described below are not intended to limit the scope of the present invention only to them, but are intended to be illustrative. Furthermore, the contents described in one exemplary embodiment or example are also applicable to other exemplary embodiments and examples. Additionally, sizes, positional relationships, and the like of members illustrated in the drawings may be exaggerated for clarity of description.

A power supply device according to a first exemplary embodiment of the present invention includes a battery block formed by stacking a plurality of battery cells in a thickness with a separator interposed therebetween, a pair of end plates disposed on both end surfaces of the battery block, and a binding bar that is coupled to the pair of end plates and fixes the battery block in a pressurized state via the end plates. The separator is made of an elastomer in which a plurality of rows of parallel ridges and a plurality of rows of parallel grooves are alternately arranged on a surface of the plate-shaped part, the surface facing the battery cell, and a cross-sectional shape thereof is a comb-like shape.

In the power supply device described above, the parallel ridges of the separator locally press an electrode of the battery cell to improve the fluidity of an electrolyte solution. The reason why the comb-teeth-shaped separator in which the parallel ridges and the parallel grooves are alternately provided on the surface facing the battery cell can improve the fluidity of the electrolyte solution is that the electrode has a high density in a region pressed by the parallel ridges, but the electrode has a low density in a region facing the parallel grooves not pressed by the parallel ridges, so that the electrolyte solution easily moves.

In the power supply device according to a second exemplary embodiment of the present invention, lateral width (W1) of the parallel ridge is in a range from 1 mm to 20 mm, inclusive.

In the power supply device according to a third exemplary embodiment of the present invention, the height of the parallel ridge is in a range from 0.1 mm to 2 mm, inclusive.

In the power supply device according to a fourth exemplary embodiment of the present invention, opening width (W2) of the parallel groove is in a range from 1 mm to 10 mm, inclusive.

In the power supply device according to a fifth exemplary embodiment of the present invention, ratio (W1/W2) between lateral width (W1) of the parallel ridge and opening width (W2) of the parallel groove are in a range from 0.1 to 10, inclusive.

In the power supply device according to a sixth exemplary embodiment of the present invention, each of the battery cells includes an electrode that is a plate-shaped electrode in which positive and negative electrode layers extending in a band shape are spirally wound and pressed into a planar shape, and the parallel ridges and the parallel grooves of the separator extend in a width direction of the positive and negative electrode layers that are in a band shape.

In the power supply device according to a seventh exemplary embodiment of the present invention, the elastomer is a synthetic rubber sheet.

In the power supply device according to an eighth exemplary embodiment of the present invention, the synthetic rubber of the elastomer layer is any one of a fluororubber, an isoprene rubber, a styrene butadiene rubber, a butadiene rubber, a chloropron rubber, a nitrile rubber, a hydrogenated nitrile rubber, a folylisobutylene rubber, an ethylene propylene rubber, an ethylene vinyl acetate copolymer rubber, a chlorosulfonated polyethylene rubber, an acrylic rubber, an epichlorohydrin rubber, a urethane rubber, a silicone rubber, a thermoplastic olefin rubber, an ethylene propylene diene rubber, a butyl rubber, and a polyether rubber.

### (First exemplary embodiment)

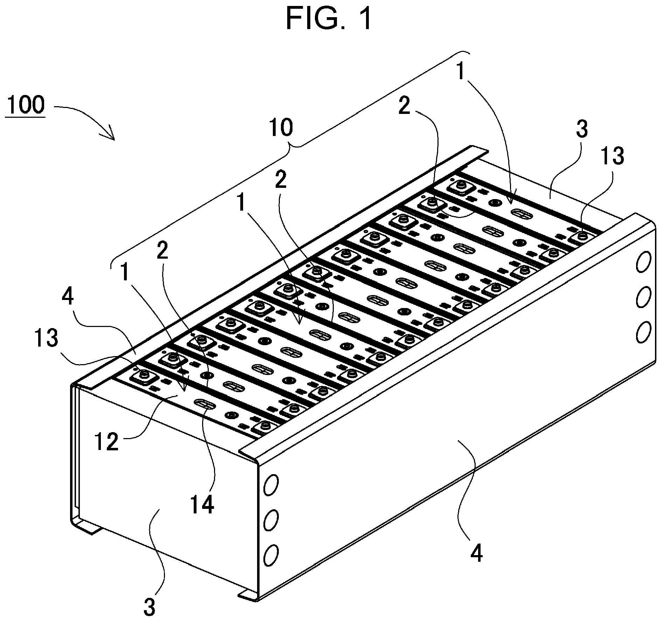

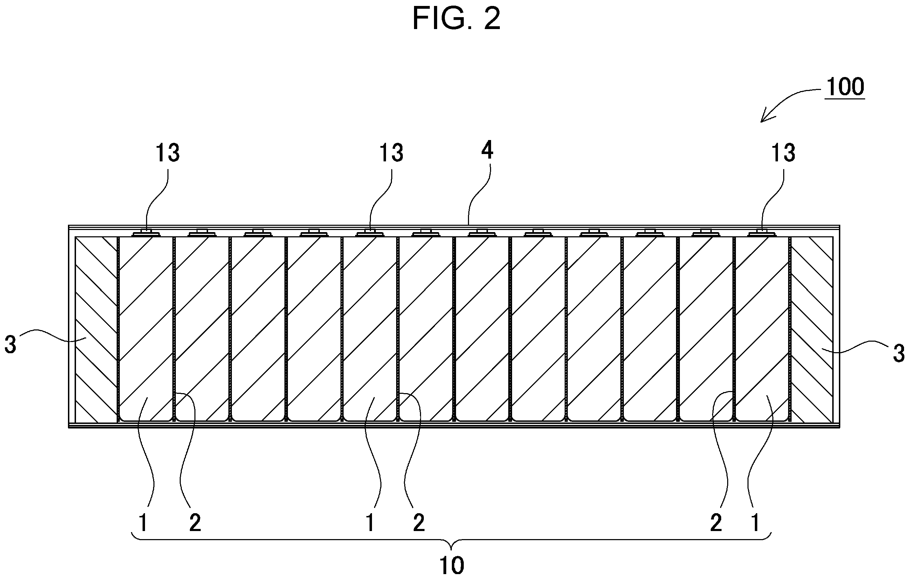

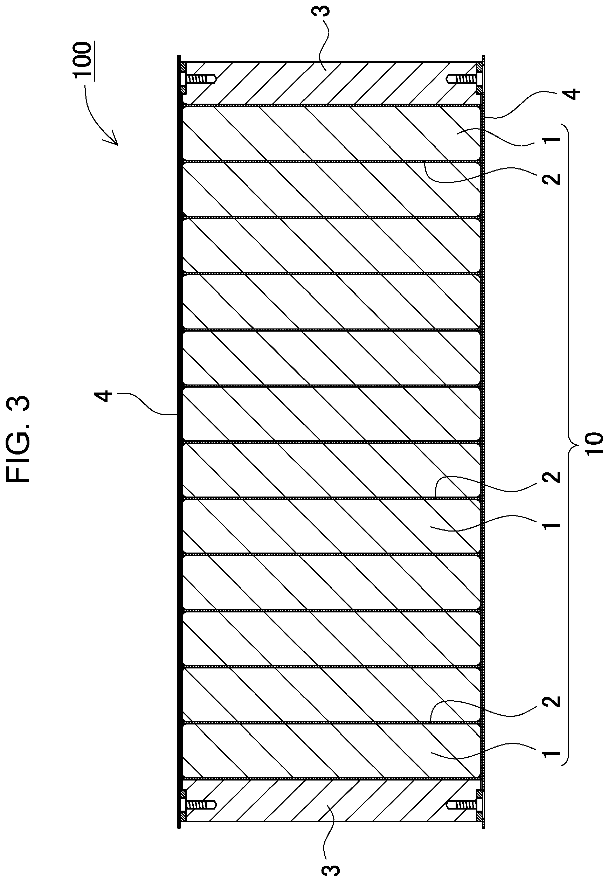

Power supply device 100 illustrated in a perspective view of Fig. 1, a vertical cross-sectional view of Fig. 2, and a horizontal cross-sectional view of Fig. 3 includes battery block 10 in which a plurality of battery cells 1 are stacked in a thickness with separator 2 interposed between battery cells 1, a pair of end plates 3 disposed on both end surfaces of battery block 10, and binding bar 4 that is coupled to the pair of end plates 3 and fixes battery block 10 in a pressurized state via end plates 3.

### (Battery block 10)

In battery block 10, a plurality of battery cells 1, which are prismatic battery cells having a quadrangular outer shape, are stacked in a thickness with separator 2 interposed therebetween. The plurality of battery cells 1 are stacked such that top surfaces thereof are flush with each other to constitute battery block 10.

### (Battery cell 1)

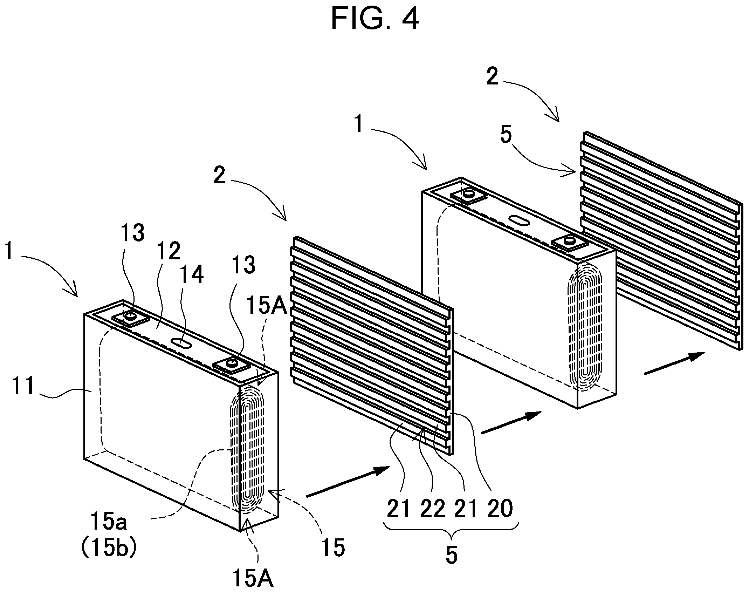

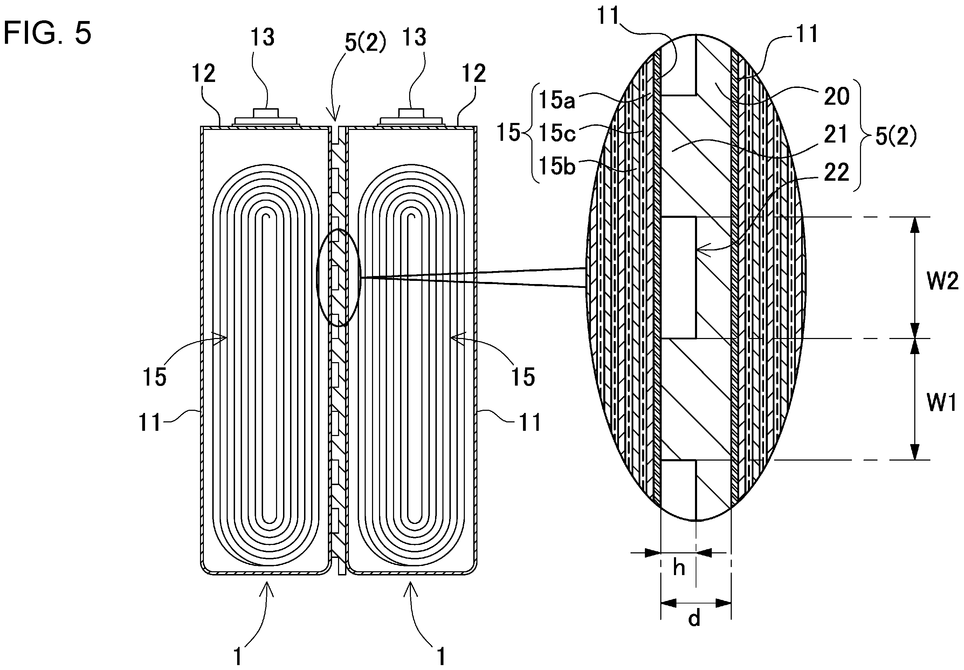

As illustrated in Figs. 4 and 5, in each of battery cells 1, electrode 15 is inserted into battery case 11 whose bottom is closed, and sealing plate 12 is laser-welded and airtightly fixed to an upper end opening, so that the inside has a sealed structure. Further, the inside of battery case 11 is filled with an electrolyte solution (not illustrated). As illustrated in Fig. 1, sealing plate 12 is provided with a pair of positive and negative electrode terminals 13 protruding upward at both end parts of the top surface. Safety valve 14 is provided between electrode terminals 13. Safety valve 14 opens to release internal gas when an internal pressure of battery cell 1 rises to more than or equal to a predetermined value. Safety valve 14 prevents a rise in internal pressure of battery cell 1.

Battery cell 1 is a lithium ion secondary battery. Power supply device 100 provided with a lithium ion secondary battery serving as battery cell 1 has an advantage in that a charging capacity per volume and weight can be increased. However, battery cell 1 may be any other chargeable battery such as a non-aqueous electrolyte secondary battery other than the lithium ion secondary battery.

### (End plate 3, binding bar 4)

Each of end plates 3 is a metal sheet substantially coinciding in outer shape with battery cell 1 and is not deformed by being pressed by battery block 10, and binding bars 4 are connected to both side edges of end plate 3. End plates 3 connect stacked battery cells 1 in a pressurized state, and binding bars 4 fix battery block 10 in the pressurized state at a predetermined pressure.

### (Separator 2)

Separator 2 is sandwiched between stacked battery cells 1, suppresses a decrease in fluidity of the electrolyte solution while absorbing expansion of battery cells 1 due to an increase in internal pressure, and further insulates adjacent battery cells 1. Battery block 10 includes bus bars (not illustrated) fixed to electrode terminals 13 of adjacent battery cells 1 to connect battery cells 1 in series or in parallel. In battery cells 1 connected in series, since a potential difference is generated between battery cases 11, battery cells 1 are insulated and stacked by separator 2. Although battery cells 1 connected in parallel cause no potential difference to be generated between battery cases 11, battery cells 1 are stacked while being thermally insulated by separator 2 to prevent induction of thermal runaway.

Separator 2 illustrated in the enlarged cross-sectional view of Fig. 5 is made of elastomer 5 that absorbs expansion of battery cell 1. In power supply device 100, in order to miniaturize battery block 10 and increase the charging capacity, it is important to thin separator 2 to absorb the expansion of battery cell 1. Thus, separator 2 of elastomer 5 has thickness (d), for example, in a range from 1 mm to 6 mm inclusive, more preferably in a range from 1.5 mm to 5 mm inclusive.

Elastomer 5 of separator 2 is a non-foamed rubber-like elastic body or foamed rubber. Elastomer 5 can elastically deform and absorb the expansion of battery cell 1 with a hardness of, for example, A30 degrees to A90 degrees. As elastomer 5, a synthetic rubber sheet is suitable. As the synthetic rubber sheet, any one of fluororubber, isoprene rubber, styrene butadiene rubber, butadiene rubber, chloropron rubber, nitrile rubber, hydrogenated nitrile rubber, folylisobutylene rubber, ethylene propylene rubber, ethylene vinyl acetate copolymer rubber, chlorosulfonated polyethylene rubber, acrylic rubber, epichlorohydrin rubber, urethane rubber, silicone rubber, thermoplastic olefin rubber, ethylene propylene diene rubber, butyl rubber, and polyether rubber can be used singly or in a stacked state of a plurality of the synthetic rubber sheets. In particular, the ethylene propylene rubber, the ethylene vinyl acetate copolymer rubber, the chlorosulfonated polyethylene rubber, the acrylic rubber, the fluororubber, and the silicone rubber have excellent heat insulating properties, and thus can realize high safety until a temperature of battery cell 1 rises to a high temperature. Further, when elastomer 5 is made of urethane rubber, it is particularly preferable to use thermoplastic polyurethane rubber or foamed polyurethane rubber.

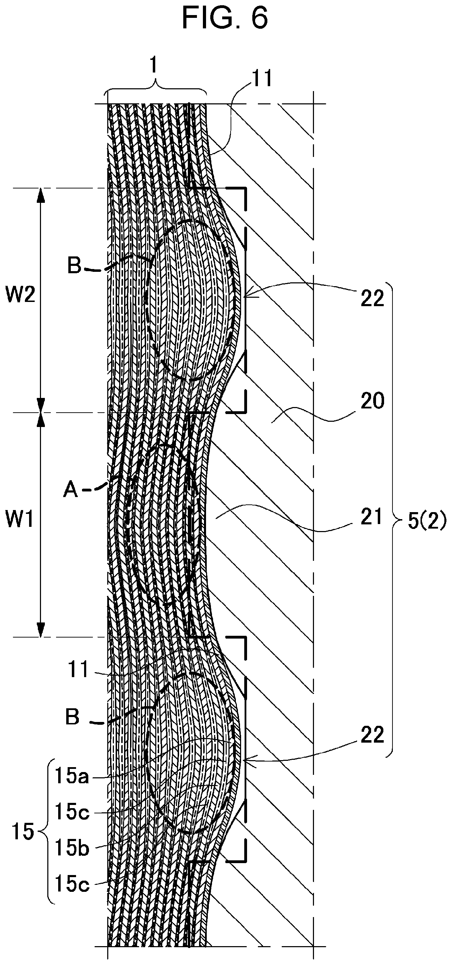

Separator 2 illustrated in Fig. 4 and Fig. 5 has a comb-like shape in cross-sectional view by alternately disposing a plurality of rows of parallel ridges 21 and a plurality of rows of parallel grooves 22 on a surface of plate-shaped part 20, which is a surface facing a battery cell surface. In separator 2, the plurality of rows of parallel ridges 21 locally press the surface of expanding battery cell 1. In battery cell 1 whose surface is pressed by the plurality of rows of parallel ridges 21, a region pressed by the parallel ridges 21 becomes a recess, and a region facing the parallel grooves 22 protrudes, and battery cell 1 is deformed into a wave shape. The enlarged cross-sectional view of the main part of Fig. 6 exaggeratedly illustrates a state in which the surface of battery cell 1 is pushed by parallel ridges 21 and deformed into a wave shape. Battery cell 1 whose surface is deformed into a wave shape deforms a surface of electrode 15 having a stacked structure housed in battery case 11 into a wave shape. In electrode 15 having the stacked structure, region A which is pressed by the plurality of rows of parallel ridges 21 to become the recess has a high density, and protruding region B which is a region facing parallel grooves 22 has a low density. Therefore, low density region B is generated in a stripe manner, and low density region B improves the fluidity of the electrolyte solution. Further, separator 2 described above is characterized in that, since low-density region B is generated in a stripe manner in electrode 15 while the expansion of battery cell 1 is absorbed by the elastic deformation of elastomer 5, low density region B can be generated in a stripe manner in electrode 15 to improve the fluidity of the electrolyte solution even at the time of expansion of battery cell 1 in which the fluidity of the electrolyte solution decreases.

Battery cell 1 illustrated in Figs. 4 to 6 is a prismatic battery in which a stacked surface of battery case 11 on which separator 2 is stacked is a quadrangular shape, positive and negative electrode layers 15a, 15b having an elongated band shape are wound to form spiral electrode 15, and spiral electrode 15 is housed in battery case 11 as a plate shape pressed in a planar shape. In electrode 15, elongated band-shaped positive and negative electrode layers 15a, 15b are stacked with insulating sheet 15c interposed therebetween, and wound to form spiral electrode 15, and spiral electrode 15 is pressed into a planar shape and housed in rectangular battery case 11. In separator 2 of elastomer 5, as illustrated in Fig. 4, parallel ridges 21 and parallel grooves 22 extend in a width direction of band-shaped positive and negative electrode layers 15a, 15b. In separator 2, parallel ridges 21 are arranged in parallel with an extending direction of U-shaped curved part 15A of spiral electrode 15, and high density region A and low density region B extending in the width direction of electrode layers 15a, 15b are formed in a stripe shape on the surface of electrode 15, so that high density region A and low density region B can be naturally provided in a stripe shape on spiral electrode 15 to improve the fluidity of the electrolyte solution.

Lateral width (W1) and height (h) of each of parallel ridges 21 and opening width (W2) of each of parallel grooves 22 are set to a dimension that allows parallel ridges 21 to press a surface of battery case 11 to deform the surface into a wave shape in consideration of hardness of elastomer 5. In separator 2 in which a hardness of elastomer 5 is A30 degrees to A90 degrees, for example, lateral width (W1) of parallel ridges 21 is in a range from 1 mm to 20 mm inclusive, preferably in a range from 2 mm to 10 mm inclusive, height (h) is in a range from 0.1 mm to 2 mm inclusive, preferably in a range from 0.2 mm to 1.5 mm inclusive, opening width (W2) of parallel grooves 22 is in a range from 1 mm to 20 mm inclusive, preferably in a range from 2 mm to 10 mm inclusive, and ratio (W1/W2) of lateral width (W1) of parallel ridges 21 to opening width (W2) of parallel grooves 22 is in a range from 0.1 to 10 inclusive, preferably in a range from 0.5 to 2 inclusive so that separator 2 can be deformed into a wave shape by pressing metal battery case 11 of battery cell 1.

In separator 2 of elastomer 5, a deformation amount of battery case 11 can be increased by increasing height (h) of parallel ridges 21 to increase opening width (W2) of parallel grooves 22. However, when parallel ridges 21 are too high, separator 2 becomes thick and buckles easily. Therefore, height (h) of parallel ridges 21 is set within the above range in consideration of the thickness allowed for separator 2 and the fact that battery case 11 can be deformed into a wave shape by being locally pressed. Further, opening width (W2) of parallel grooves 22, and ratio (W1/W2) of lateral width (W1) of parallel ridges 21 to opening width (W2) of parallel grooves 22 specify a pitch at which the surface of battery case 11 is deformed into a wave shape, and thus are set within the above ranges in consideration of setting the fluidity of the electrolyte solution to a preferable state while the expansion of battery cell 1 is supported by the plurality of rows of parallel ridges 21. For example, in power supply device 100 in which battery cell 1 is a prismatic lithium ion battery, battery case 11 is an aluminum plate having a thickness of 0.3 mm, an area of the stacked surface is 100 cm², lateral width (W1) of parallel ridges 21 and opening width (W2) of parallel grooves 22 are 5 mm, height (h) of parallel ridges 21 is 0.5 mm, a hardness of elastomer 5 is A60 degrees, and the number of battery cells 1 to be stacked is 12, the surface facing separator 2 is deformed into a wave shape in a state where battery cell 1 expands, and the fluidity of the electrolyte solution can be improved.

As illustrated in Figs. 4 and 5, separator 2 is stacked between battery cells 1 adjacent to each other and sandwiched from both sides. The separator 2 illustrated in the figure has a planar shape in which parallel ridges 21 and parallel grooves 22 are provided on one side surface and parallel ridges 21 and parallel grooves 22 are not provided on the opposite side surface. In separator 2 having this structure, as illustrated in Fig. 4, in a state in which the plurality of battery cells 1 and separator 2 are alternately stacked to form battery block 10, parallel ridges 21 can be brought into contact with the stacked surfaces of all battery cells 1 by stacking so that the surfaces of separator 2 provided with parallel ridges 21 and parallel grooves 22 are oriented in the same direction, and the fluidity of the electrolyte solution of all battery cells 1 can be improved. Since separator 2 having this structure is provided with parallel ridges 21 and parallel grooves 22 only on one side, the entire separator can be molded thin, and the fluidity of the electrolyte solution can be improved while the length of the entire battery block is shortened.

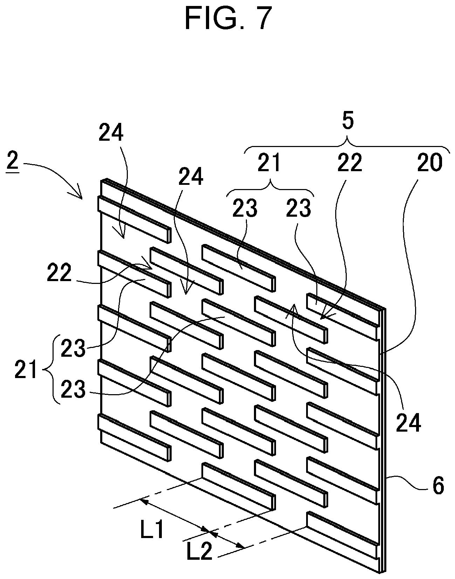

Separator 2 illustrated in Fig. 4 has a structure in which an entire length of the plurality of rows of parallel ridges 21 extending in a lateral width direction (horizontal direction in the drawing) of battery cell 1 is substantially equal to a lateral width of battery cell 1, and a facing surface of battery cell 1 is pressed by the plurality of rows of parallel ridges 21 extending in a streak parallel to each other. Further, as illustrated in Fig. 7, separator 2 can also be divided into the plurality of parallel ridges 21 extending in a longitudinal direction. In separator 2 illustrated in Fig. 7, cut part 24 is provided at an intermediate part of parallel ridges 21 to divide one row of the parallel ridges 21 into a plurality of protrusions 23. Further, in adjacent parallel ridges 21, protrusions 23 are arranged in a staggered manner when viewed from a front. That is, the positions of protrusions 23 are shifted in a left-right direction between adjacent parallel ridges 21 such that protrusion 23 of the other parallel ridge 21 is positioned at a position facing cut part 24 provided on one parallel ridge 21. In separator 2 illustrated in the drawing, in order to form protrusions 23 of parallel ridges 21 adjacent to each other into a staggered shape, cut parts 24 are also provided at both ends of parallel ridges 21 in every other row. As described above, the structure in which the plurality of divided protrusions 23 are arranged in a staggered shape has an advantage that the pressing force received from battery cell 1 can be uniformly dispersed. However, the plurality of divided protrusions can be arranged vertically and horizontally or randomly. Separator 2 including parallel ridges 21 having the shape described above is more easily elastically deformed than separator 2 having a structure in which parallel ridges 21 are not divided, and has an advantage that expansion of battery cell 1 can be effectively absorbed.

Furthermore, in separator 2 having the shape illustrated in Fig. 7, the ease of elastic deformation of parallel ridges 21 can be adjusted by adjusting length (L1) of protrusion 23 and length (L2) of cut part 24. For example, separator 2 can be easily elastically deformed by increasing ratio (L2/L1) of length (L2) of cut part 24 to length (L1) of protrusion 23, and on the contrary, separator 2 can be hardly elastically deformed by decreasing ratio (L2/L1). That is, separators 2 can be deformed more easily by dividing parallel ridges 21 into a plurality of parts than a structure in which parallel ridges 21 are not divided, and can be deformed more easily by adjusting ratio (L2/L1). Furthermore, ratio (L2/L1) of length (L2) of cut part 24 to length (L1) of protrusion 23 can be changed depending on the region even on one surface facing battery cell 1. For example, ratio (L2/L1) can be increased to easily absorb the deformation in a region facing a central part where the deformation amount increases when battery cell 1 expands, and ratio (L2/L1) can be decreased to suppress the deformation in a region facing an outer peripheral part where the deformation amount during expansion is small.

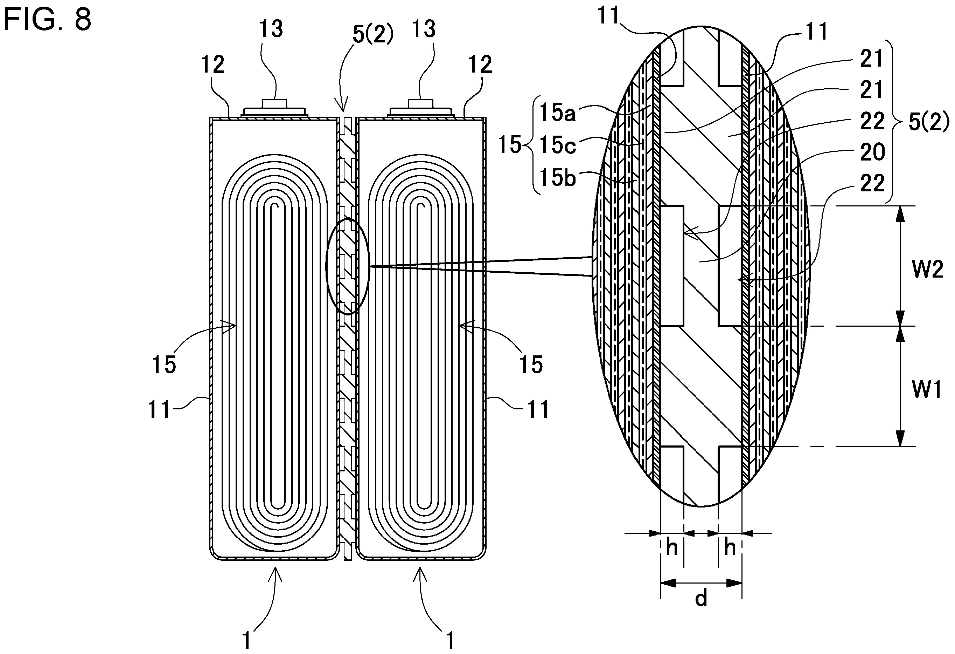

Further, in separator 2, parallel ridge 21 and parallel groove 22 can be provided on both opposing surfaces. In separator 2 illustrated in Fig. 8, a plurality of rows of parallel ridges 21 are provided so as to protrude from both surfaces of plate-shaped part 20, and parallel grooves 22 are provided between adjacent parallel ridges 21 on both surfaces of plate-shaped part 20. Separator 2 in the drawing is provided with a plurality of rows of parallel ridges 21 and parallel grooves 22 on a surface facing a stacked surface of battery cells 1 stacked on both sides. Parallel ridges 21 protruding from both surfaces of plate-shaped part 20 are formed at positions facing each other, and can receive a pressing force from battery cells 1 by parallel ridges 21 at the positions facing each other in a state of being pressed by battery cells 1 on both sides. In separator 2 having this structure, the high density region and the low density region of electrode 15 are provided in a stripe manner on the opposing surfaces of battery cells 1 disposed on both surfaces. In other words, the high density region and the low density region of electrode 15 are provided in a stripe manner on both surfaces of battery cell 1, so that the fluidity of the electrolyte can be improved. Therefore, in battery cell 1, the fluidity of the electrolyte is improved on the opposing surfaces on both sides, and the degradation is more effectively suppressed.

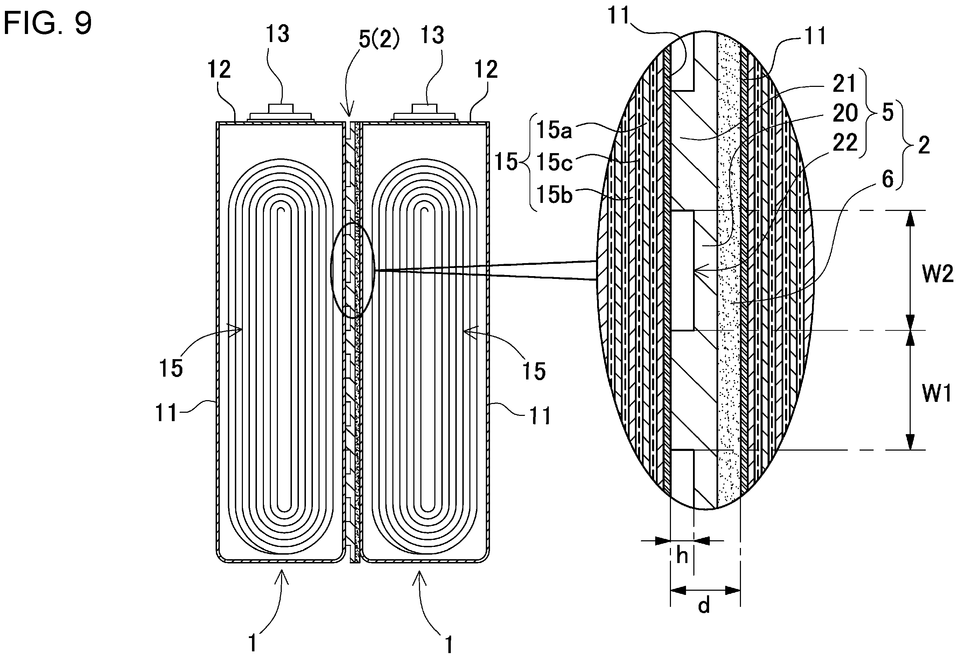

Further, separator 2 may be a stacked body obtained by laminating elastic sheet 6 on elastomer 5. In separator 2 illustrated in Fig. 9, elastic sheet 6 is laminated with one side surface of elastomer 5, which is a surface opposite to the surface provided with the parallel ridges 21 and the parallel grooves 22, as a flat surface. Separator 2 more effectively absorbs the expansion of battery cell 1 by forming elastic sheet 6 as a flexible plastic foam that is more easily elastically deformed, that is, more easily crushed than elastomer 5. Separator 2 presses the surface of one adjacent battery cell 1 with parallel ridge 21 of elastomer 5, and elastic sheet 6 presses the surface of battery cell 1 on the other side. In separator 2, parallel ridges 21 of elastomer 5 press one surface of battery cell 1 to improve fluidity of the electrolyte on the battery cell surface facing elastomer 5.

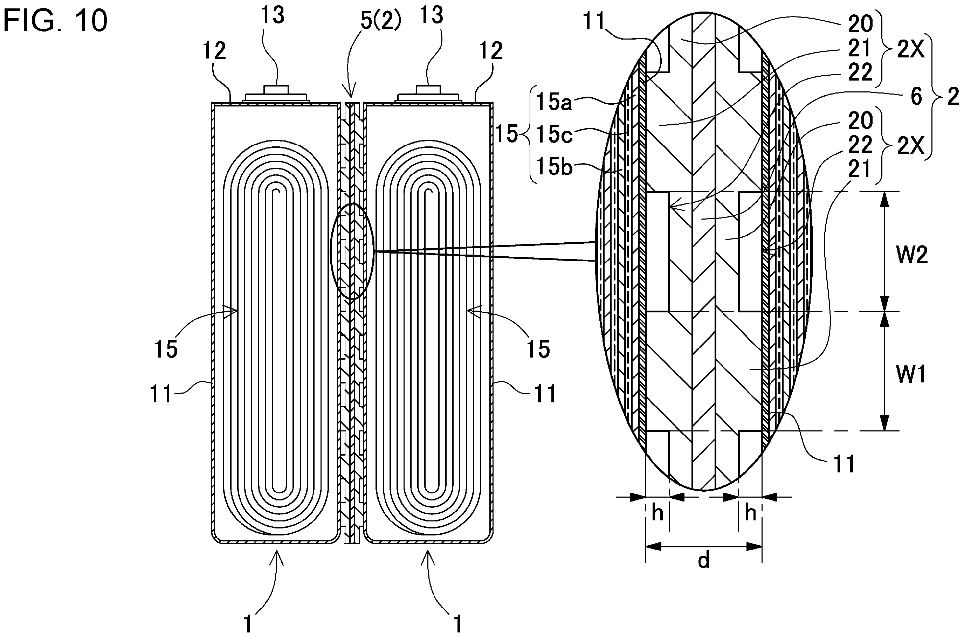

Further, in separator 2 illustrated in Fig. 10, elastic sheet 6 is sandwiched in the middle, and both surfaces are formed of surface separator 2X of elastomer 5. Surface separator 2X is joined to elastic sheet 6 by providing parallel ridges 21 and parallel grooves 22 on the surface facing the battery cells 1 and making the joint surface with elastic sheet 6 planar. Separator 2 also more effectively absorbs the expansion of battery cell by forming elastic sheet 6 as a flexible plastic foam that is more easily elastically deformed, that is, more easily crushed than elastomer 5.

Elastic sheet 6 is a sheet that is thinly and elastically deformed by being pushed by expanding battery cell 1, and is an elastic material of plastic foam. As a plastic foam, an open-cell or closed-cell soft urethane foam can be used. Elastic sheet 6 of open-cell plastic foam has an advantage that a deformation amount can be adjusted by porosity, and the porosity can be increased to increase the deformation amount.

Elastic sheet 6 of separator 2 is adjusted to have elasticity and a thickness that absorb expansion by being pressurized and deformed by expanding battery cells 1. The amount of deformation of elastic sheet 6 due to expansion of battery cells 1 can be adjusted by the type and apparent density of plastic to be foamed, and the apparent density can be adjusted by a foaming rate. Elastic sheet 6 has an apparent density in a range, for example, 150 kg/m³ to 750 kg/m³ inclusive, preferably a range from 200 kg/m³ to 500 kg/m³ inclusive, and has a thickness in a range, for example, 0.2 mm to 1 mm inclusive.

In battery cell 1 described above, as illustrated in Fig. 4, plate-shaped spiral electrode 15 is housed in battery case 11 such that the axis orients in the width direction of battery cell 1. Therefore, separator 2 is stacked on the facing surface of battery cell 1 such that the extending direction of parallel ridges 21 and parallel grooves 22 is the width direction of battery cell 1. As described above, parallel ridges 21 and parallel grooves 22 of separator 2 are stacked so as to extend in the horizontal direction in the drawing, whereby parallel ridges 21 and parallel grooves 22 can be arranged on the surface of battery cell 1 so as to be parallel to the axis of spiral electrode 15. As a result, when battery cell 1 expands, the high density region and the low density region extending in the width direction of electrode layers 15a, 15b are formed in a stripe shape on the surface of spiral electrode 15, and the fluidity of the electrolyte solution can be improved.

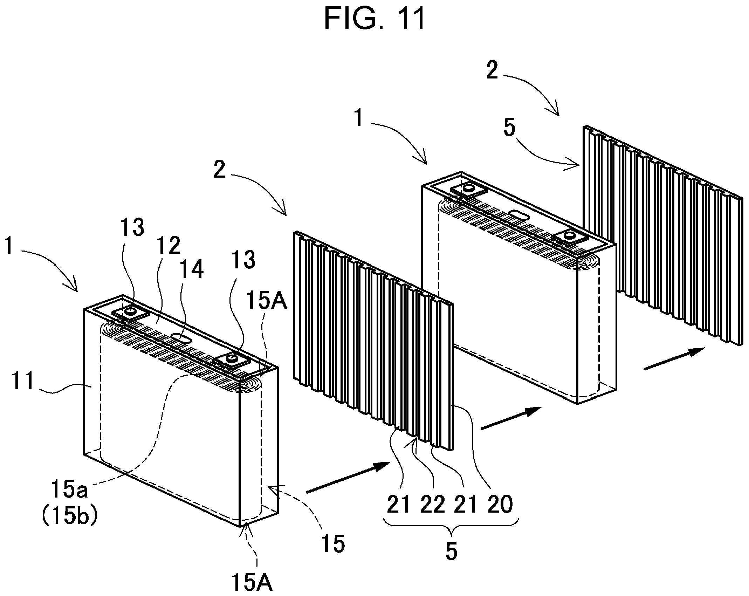

However, as illustrated in Fig. 11, in battery cell 1, plate-shaped spiral electrode 15 can also be housed in battery case 1 such that the axis orients in the height direction of battery cell 1 and the depth direction of battery case 11. Separator 2 stacked on battery cell 1 having this structure is stacked on the facing surface of battery cell 1 such that the extending direction of parallel ridges 21 and parallel grooves 22 is the height direction of battery cell 1. According to this structure, parallel ridges 21 and parallel grooves 22 of separator 2 are stacked on battery cells 1 so as to extend in the vertical direction in the drawing, whereby parallel ridges 21 and parallel grooves 2 can be arranged on the surface of battery cells 1 so as to be parallel to the axis of spiral electrode 15. As a result, when battery cell 1 expands, the high density region and the low density region extending in the width of electrode layers 15a, 15b are formed in a stripe shape on the surface of spiral electrode 15, and the fluidity of the electrolyte solution can be improved.

The power supply device described above can be used as a power source for a vehicle where electric power is supplied to a motor used for causing an electric vehicle to travel. As the electric vehicle on which the power supply device is mounted, an electric vehicle such as a hybrid automobile or a plug-in hybrid automobile that travels by both an engine and a motor, or an electric automobile that travels only by a motor can be used, and the power supply device is used as a power source for the vehicle. Note that, in order to obtain electric power for driving a vehicle, an example of constructing large-capacity and high-output power supply device 100 will be described below in which a large number of the above-described power supply devices are connected in series or in parallel, and a necessary controlling circuit is further added.

### (Power supply device for hybrid automobile)

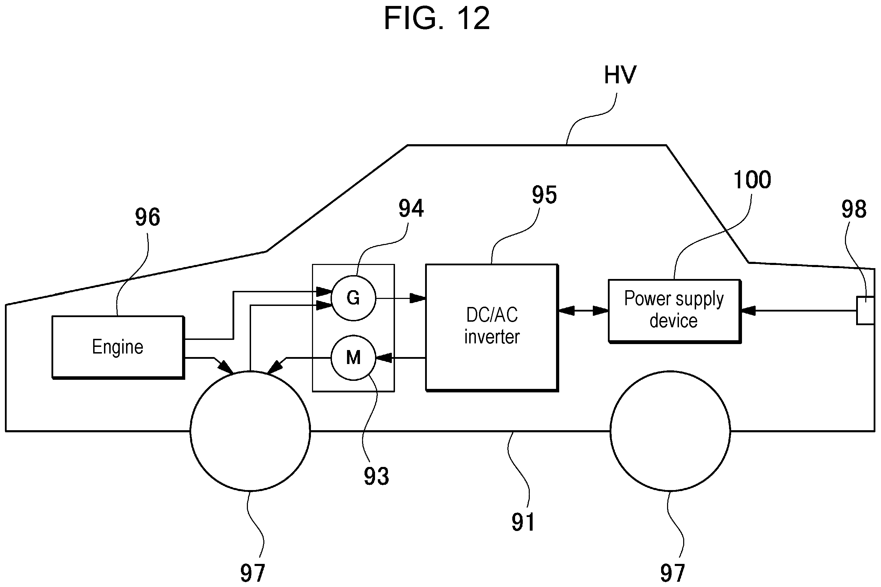

Fig. 12 illustrates an example of a power supply device mounted on a hybrid automobile that travels by both an engine and a motor. Vehicle HV incorporating the power supply device illustrated in this figure includes vehicle body 91, engine 96 and motor 93 for traveling to cause vehicle body 91 to travel, wheels 97 that are driven by engine 96 and motor 93 for traveling, power supply device 100 to supply motor 93 with electric power, and power generator 94 to charge a battery included in power supply device 100. Power supply device 100 is connected to motor 93 and power generator 94 via DC/AC inverter 95. Vehicle HV travels by both motor 93 and engine 96 while charging and discharging the battery of power supply device 100. Motor 93 is driven in a region where engine efficiency is low, for example, during acceleration or low-speed traveling, and causes the vehicle to travel. Motor 93 is driven by electric power supplied from power supply device 100. Power generator 94 is driven by engine 96 or by regenerative braking generated at the time of applying braking to the vehicle, and charges the battery of power supply device 100. As illustrated in Fig. 12, vehicle HV may include charging plug 98 for charging power supply device 100. By connecting charging plug 98 to an external power source, power supply device 100 can be charged.

### (Power supply device for electric automobile)

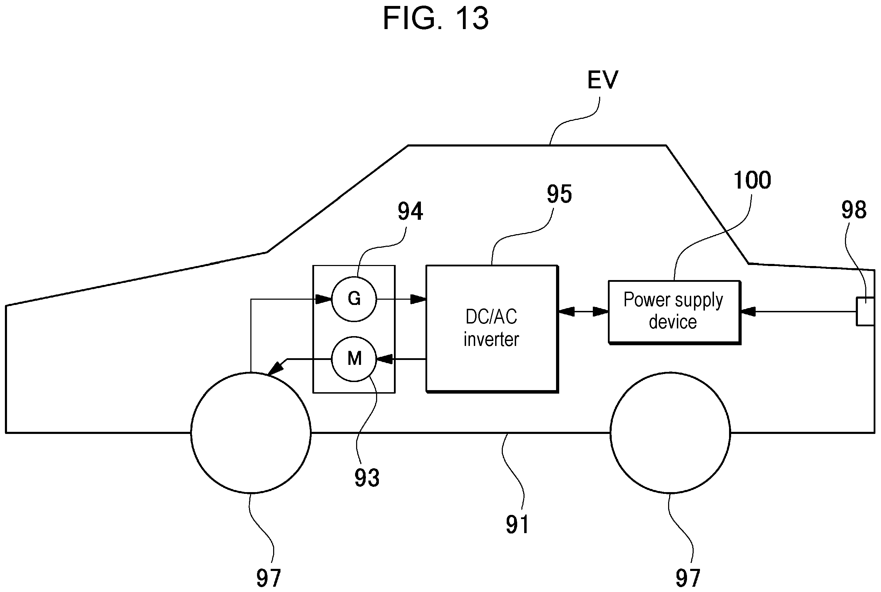

Fig. 13 illustrates an example of a power supply device mounted on an electric automobile that travels only by a motor. Vehicle EV illustrated in this figure on which the power supply device is mounted includes vehicle body 91, motor 93 for travelling that causes vehicle body 91 to travel, wheels 97 driven by motor 93, power supply device 100 that supplies electric power to motor 93, and power generator 94 that charges a battery of power supply device 100. Power supply device 100 is connected to motor 93 and power generator 94 via DC/AC inverter 95. Motor 93 is driven by electric power supplied from power supply device 100. Power generator 94 is driven by an energy at the time of applying regenerative braking to vehicle EV and charges the battery of power supply device 100. Further, vehicle EV includes charging plug 98, and power supply device 100 can be charged by connecting charging plug 98 to an external power source.

### (Power supply device for power storage device)

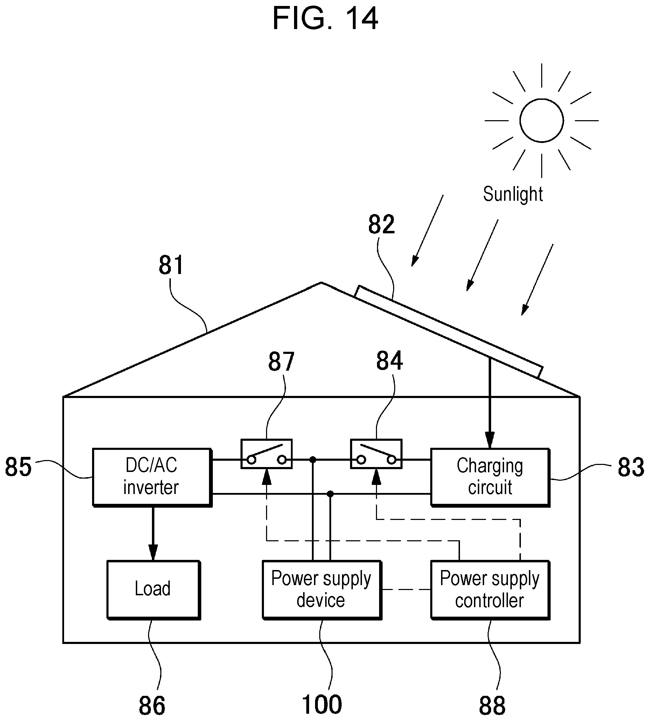

Further, the present invention does not limit the application of the power supply device to a power source for a motor that causes a vehicle to travel. The power supply device according to the exemplary embodiment can be used also as a power source for a power storage device that charges a battery with electric power generated by solar power generation, wind power generation, or the like, and stores electricity. Fig. 14 illustrates a power storage device that performs power storage by charging the battery of power supply device 100 by solar battery 82.

The power storage device illustrated in Fig. 14 charges the battery of power supply device 100 with electric power generated by solar battery 82 disposed on a roof or a rooftop of building 81 such as a house or a factory. In this power storage device, the battery of power supply device 100 is charged by charging circuit 83 using solar battery 82 as a charging power source, and thereafter, electric power is supplied to load 86 via DC/AC inverter 85. Therefore, the power storage device includes a charge mode and a discharge mode. In the power storage device illustrated in the figure, DC/AC inverter 85 is connected to power supply device 100 via discharging switch 87, and charging circuit 83 is connected to power supply device 100 via charging switch 84. Discharging switch 87 and charging switch 84 are turned on and off by power supply controller 88 of the power storage device. In the charge mode, power supply controller 88 turns on charging switch 84 and turns off discharging switch 87 to allow charging from charging circuit 83 to power supply device 100. Further, when charging is completed and the battery is fully charged or when the battery is in a state where a capacity of a predetermined value or more is charged, power supply controller 88 turns off charging switch 84 and turns on discharging switch 87 to switch the mode to the discharge mode and allows discharging from power supply device 100 to load 86. Furthermore, when necessary, the power supply controller can turn on charging switch 84 and turn on discharging switch 87 to supply electricity to load 86 and charge power supply device 100 simultaneously.

Further, although not illustrated, the power supply device can be used as a power source for a power storage device that stores electricity by charging a battery using midnight electric power at nighttime. The power supply device that is charged with midnight electric power is charged with the midnight electric power that is surplus electric power generated by a power station, and outputs the electric power during the daytime when an electric power load increases, which can limit peak electric power during the daytime to a small value. Furthermore, the power supply device can also be used as a power source charged with both an output of a solar battery and midnight electric power. This power supply device can effectively utilize both electric power generated by the solar battery and the midnight electric power, and can efficiently store power in consideration of weather and power consumption.

The power storage device as described above can be suitably used for applications such as a backup power supply device that can be mounted on a rack of a computer server, a backup power supply device for a radio base station such as a cellular phone, a power source for household or factory power storage, a power source for street lamps, and the like, a power storage device combined with a solar battery, and a backup power source for traffic lights or traffic displays for roads.

### INDUSTRIAL APPLICABILITY

The power supply device according to the present invention is suitably used as a power source for a large current used for a power source of a motor for driving an electric vehicle such as a hybrid automobile, a fuel battery automobile, an electric automobile, or an electric motorcycle. Examples include a power supply device for a plug-in hybrid electric automobile and a hybrid electric automobile that can switch between an EV travelling mode and an HEV travelling mode, an electric automobile, and the like. Further, the present invention can be appropriately used for applications such as a backup power supply device that can be mounted on a rack of a computer server, a backup power supply device for a radio base station such as a cellular phone, a power source for power storage for home and factory use, a power source for street lamps, and the like, a power storage device combined with a solar battery, and a backup power source for traffic lights and the like.

### REFERENCE MARKS IN THE DRAWINGS

100: power supply device
1: battery cell
2: separator
2X: surface separator
3: end plate
4: binding bar
5: elastomer
6: elastic sheet
10: battery block
11: battery case
12: sealing plate
13: electrode terminal
14: safety valve
15: electrode
15A: U-shaped curved part
15a: electrode layer
15b: electrode layer
15c: insulating sheet
20: plate-shaped part
21: parallel ridge
22: parallel groove
23: protrusion
24: cut part
81: building
82: solar battery
83: charging circuit
84: charging switch
85: DC/AC inverter
86: load
87: discharging switch
88: power supply controller
91: vehicle body
93: motor
94: power generator
95: DC/AC inverter
96: engine
97: wheel
98: charging plug
HV, EV: vehicle

## Claims

1. A power supply device comprising:
a battery block including a plurality of battery cells stacked in a thickness with a separator sandwiched between the plurality of battery cells;
a pair of end plates disposed on both end surfaces of the battery block; and
a binding bar that is coupled to the pair of end plates and fixes the battery block in a pressurized state via the end plates,
wherein the separator is an elastomer in a comb shape in cross-sectional view in which, on a surface of a plate-shaped part, the surface facing each of the plurality of battery cells, a plurality of rows of parallel ridges and a plurality of rows of parallel grooves are alternately arranged.

2. The power supply device according to Claim 1, wherein a lateral width (W1) of each of the parallel ridges is in a range from 1 mm to 20 mm, inclusive.

3. The power supply device according to Claim 1 or 2, wherein a height (h) of the each of the parallel ridges is in a range from 0.1 mm to 2 mm, inclusive.

4. The power supply device according to any one of Claims 1 to 3, wherein an opening width (W2) of each of the parallel grooves is in a range from 1 mm to 10 mm, inclusive.

5. The power supply device according to any one of Claims 1 to 4, wherein a ratio (W1/W2) between the lateral width (W1) of the each of the parallel ridges and the opening width (W2) of the each of the parallel grooves is in a range from 0.1 to 10, inclusive.

6. The power supply device according to any one of Claims 1 to 5, wherein
an electrode of the each of the plurality of battery cells is a plate-shaped electrode in which positive and negative electrode layers extending in a band shape are spirally wound and pressed into a planar shape, and
the parallel ridges and the parallel grooves of the separator extend in a width direction of the positive and negative electrode layers that are in the band shape.

7. The power supply device according to any one of Claims 1 to 6, wherein the elastomer is a synthetic rubber sheet.

8. The power supply device according to Claim 7, wherein a synthetic rubber of the elastomer is any one of a fluororubber, an isoprene rubber, a styrene butadiene rubber, a butadiene rubber, a chloropron rubber, a nitrile rubber, a hydrogenated nitrile rubber, a folylisobutylene rubber, an ethylene propylene rubber, an ethylene vinyl acetate copolymer rubber, a chlorosulfonated polyethylene rubber, an acrylic rubber, an epichlorohydrin rubber, a urethane rubber, a silicone rubber, a thermoplastic olefin rubber, an ethylene propylene diene rubber, a butyl rubber, and a polyether rubber.

9. An electric vehicle including the power supply device according to any one of Claims 1 to 8, the electric vehicle comprising:
the power supply device;
a motor for traveling to which electric power is supplied from the power supply device;
a vehicle body on which the power supply device and the motor are mounted; and
wheels driven by the motor to cause the vehicle body to travel.

10. A power storage device including the power supply device according to any one of Claims 1 to 8, the power storage device comprising:
the power supply device; and
a power supply controller that controls charging and discharging to the power supply device,
wherein the power supply controller enables charging to the secondary battery cell by electric power from an outside, and performs control to charge the secondary battery cell.
